# EUROPEAN PATENT APPLICATION

(11) **EP 2 182 768 A1**
(43) Date of publication of application: **05.05.2010**
(21) Application number: 08305754.7
(22) Date of filing: 30.10.2008
(51) Int. Cl.: H04W 76/00

(54) **A system and method enabling a user to receive a reconnection notification in a telecommunication network**

(71) Applicant: FRANCE TELECOM, 75015 Paris (FR)
(72) Inventor: Moulin, Bénédicte, LONDON, SW1V 1QS (GB); Jimenez Aldama, Borja, LONDON, W4 5XS (GB)
(74) Representative: Thiel, Frédéric

(57) **Abstract**

The invention relates to a method, in a telecommunication network, for reconnecting a first party in a call with a second party after said first party experienced a call disconnection, said method comprising the act of reconnecting the first party with the second party when determining that said first party is able to reconnect the call, wherein the act of reconnecting is carried out if a disconnection message has not been exchanged with the second party.

## Description

### FIELD OF THE PRESENT SYSTEM:

The present invention generally relates to telecommunications, and more specifically to the delivery of enhanced communications services.

### BACKGROUND OF THE PRESENT SYSTEM

Mobile phones have become important devices in our daily life. Users count on the reliability of communication networks to ensure troubleless calls or data services. Unfortunately, mobile phones are commonly disconnected from their telecommunication network, for example a Global System for Mobile (GSM) network or a Code Division Multiple Access (CDMA) network, causing a call to another party to end. The loss of connection signal, causing the call disconnection, may be due for instance to a poor network coverage, e.g. when a user enters a tunnel, takes a lift or the subway, or a drop in QoS (quality of service) when the networks gets saturated. Other network glitches may also cause loss of connectivity. Such loss of connection signal (or connectivity) is often called a call drop or dropped call.

When this happens during a call, or more generally a session such as e.g. a SIP (Session Initiation Protocol) session, the call/session is also lost (i.e. terminated) and the two parties are disconnected, even if the disruption is very short. With a dropped call, none of the two parties can simply rejoin the call, one of them needing to start a new one. It becomes then desirable for the user who lost the connection signal to easily reconnect with the other party to resume the call.

NewStep has already provided a solution to this problem called "Automatic Reconnect™", for a dropped call between first and second parties or users A and B respectively. When a call is dropped by or on behalf of the first party A, the call is not terminated as opposed to a normal termination after user A hangs up. The other user B stays in the call temporarily to give the first user A a window of time to reconnect to the call.

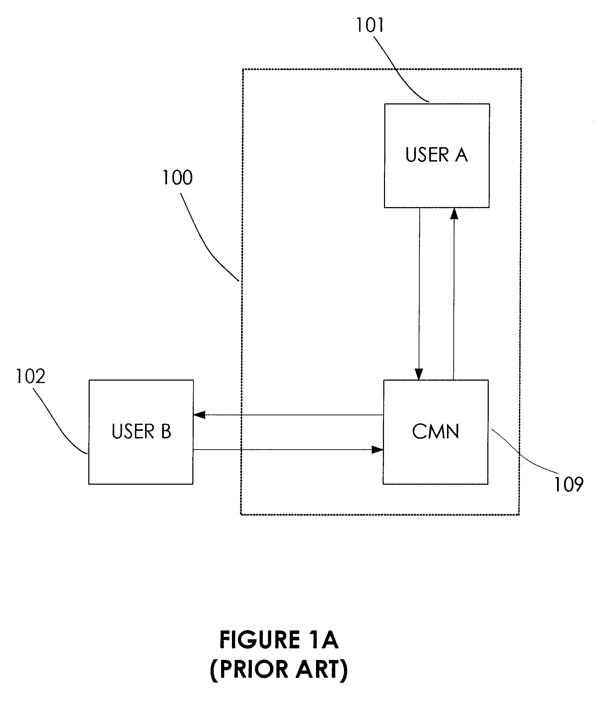

FIG. 1A shows an illustration of this known solution. A first and second telecommunication devices, respectively 101 attached to user A and 102 attached to user B are in communication (e.g. a call) with each other in a telecommunication network 100, for example a Private Branch exchange (PBX) network. A call management node (CMN) 109 is provided within network 100 to provide advanced call management. To that extend, Call Management Node 109, plugged to PBX network 100, is aware of all signaling information (e.g. signaling messages) sent or received by any user of the network. CMN 109 is further adapted to intercept any signaling information of call disconnections issued by the network (BYE signal for instance) or coming from either party in the call, information that corresponds to the end of the call from either user A or B's branch of the call. This management node 109 then retains the message in order to keep the call active for user B, and will start a timer. If before the end of a given time limit user A dials a special number (once this user has regained connectivity), CMN 109 allows user A to reconnected to the call with B. If the timer reaches the time limit before A dials this "reconnect" number, the call is dropped following known call termination methods, e.g. through the release of the disconnect message to the rest of the network for further processing. This feature will be referred to as the reconnect feature here after.

Another solution is known from US2002187788A1. User A may be prompted once he/she has regained connectivity to resume the call. To do so, the server that can also be seen as a call management node, will store information related to the dropped call, and will inform B through a message to stay online.

The applicant's pending EP08305081 discloses an alternative reconnect feature that inform the user B to stay online through redirecting user B branch of the call to a media service.

If the first user A is able to easily rejoin the call after being disconnected, a main drawback in these known solutions is that the other party B may hang up even if prompted or informed to stay online. Even though the call is maintained active for user B while the timer is running, user B may decide to end his side of the call to avoid communications charges or for fear it may take too long to resume the communication with the first user
A. User B is therefore very likely to hang up.

Furthermore, the existing solutions have a drawback regarding how user A is managed. Indeed user A has no idea whether user B has hung up or may be waiting for the reconnection.

Today there is still a need for solution that allows the call reconnect feature and that takes into account the status of the different users involved in a communication to be resumed.

### SUMMARY OF THE PRESENT SYSTEM AND METHOD:

It is an object of the present system, processor and method to overcome disadvantages and/or make improvements in the prior art.

To that extent, the present method proposes a method for reconnecting at least a first party in a call with a second party - after said first party experience a call disconnection - according to claim 1.

Thanks to the present method, a mean is proposed to provide a reconnect feature that will be carried out only if the second party is still waiting for the call to resume. Through this service, the first party will only complete a successful reconnection if the second party is still available to reconnect.

A telecommunication device according to claim 4, a reconnection notification node according to claim 7, telecommunications systems according to claims 10 and 13, as well as a computer program according to claim 14, will be described here after.

### BRIEF DESCRIPTION OF THE DRAWINGS:

The present system, call management node and method are explained in further detail, and by way of example, with reference to the accompanying drawings wherein:
FIG. 1A shows an illustration of a known system,
FIG. 1B shows an illustration of an exemplary embodiment of the present system,
FIG. 2A shows an illustration of an exemplary embodiment of the logical architecture used in the present system,
FIG. 3 shows exemplary embodiments of the present system,

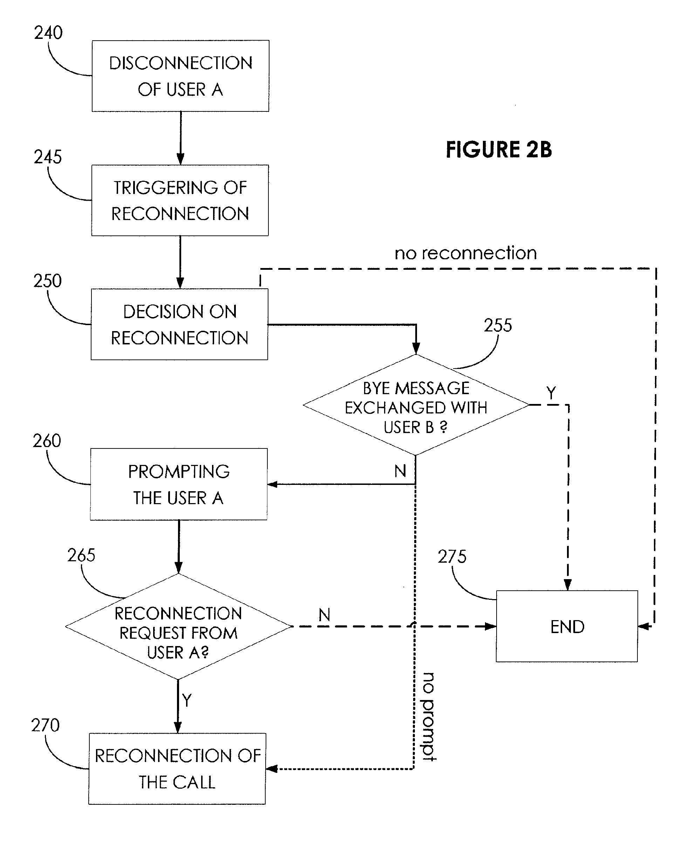

FIG. 2B shows a first exemplary embodiment of the present method,

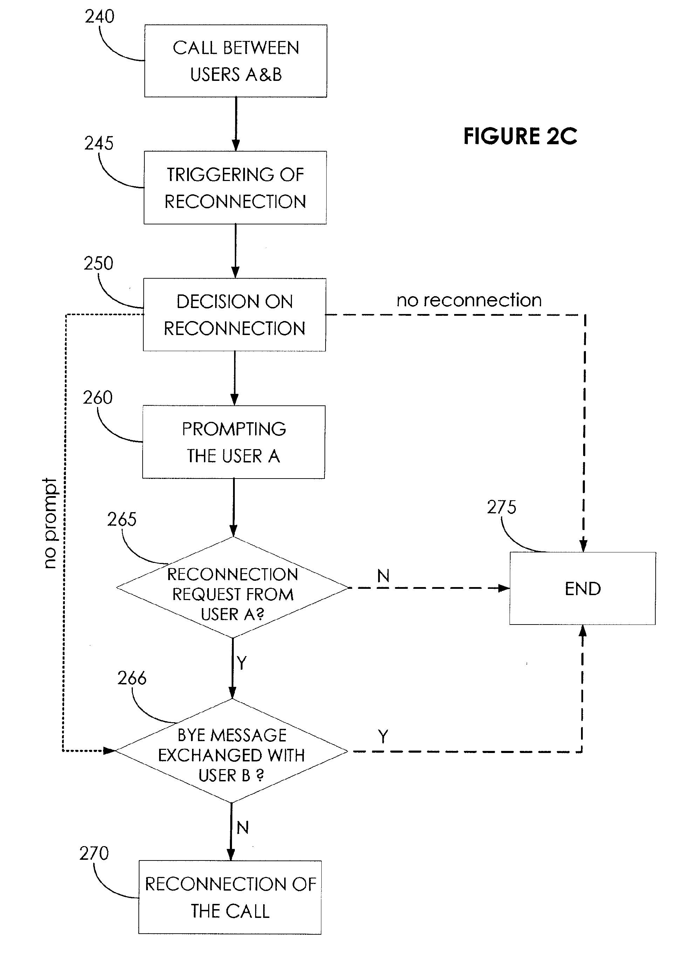

FIG. 2C shows a second exemplary embodiment of the present method,

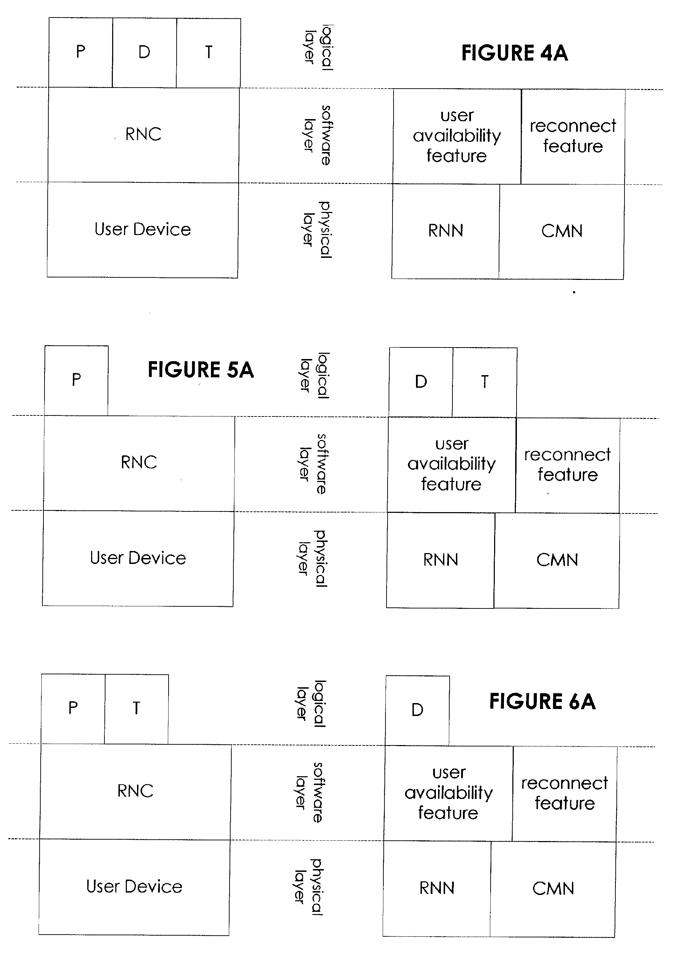

FIGs. 4A show a first exemplary embodiment of the architecture of the present system,

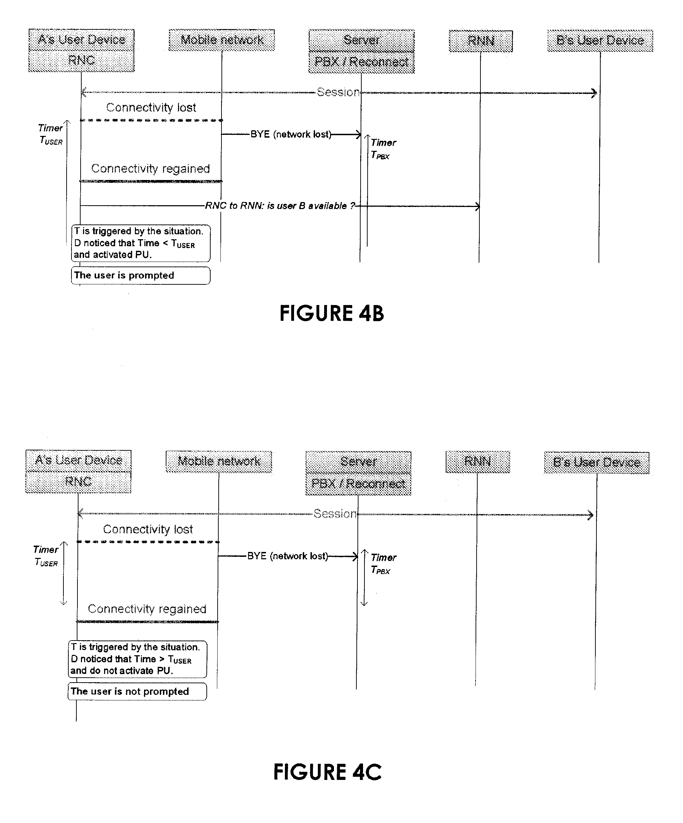

FIGs. 4B-C show different exemplary call flowcharts corresponding to the first exemplary architecture of FIG. 4A,
FIGs. 5A show a second exemplary embodiment of the architecture of the present system,

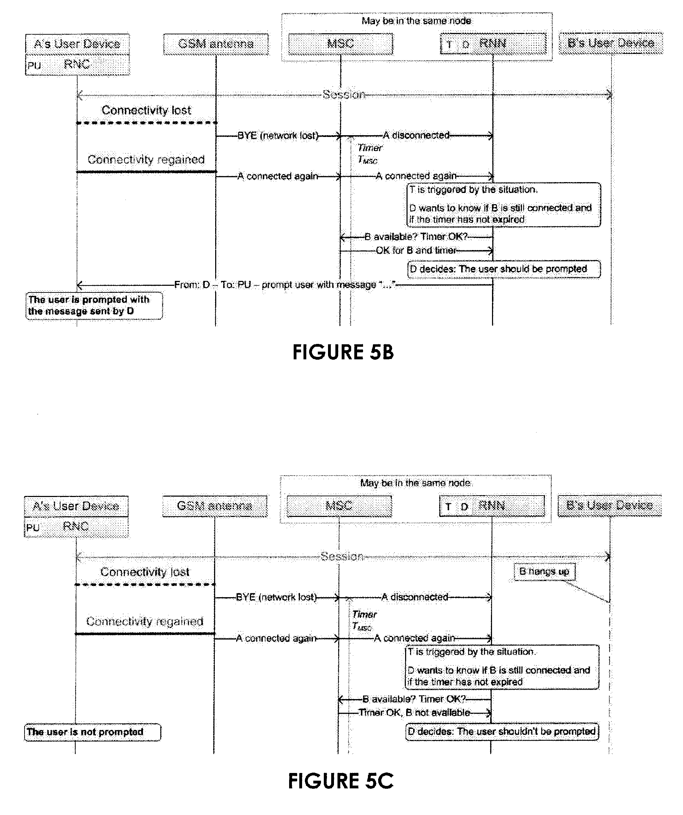

FIGs. 5B-C show different exemplary call flowcharts corresponding to the second exemplary architecture of FIG. 5A,
FIGs. 6A show a third exemplary embodiment of the architecture of the present system,

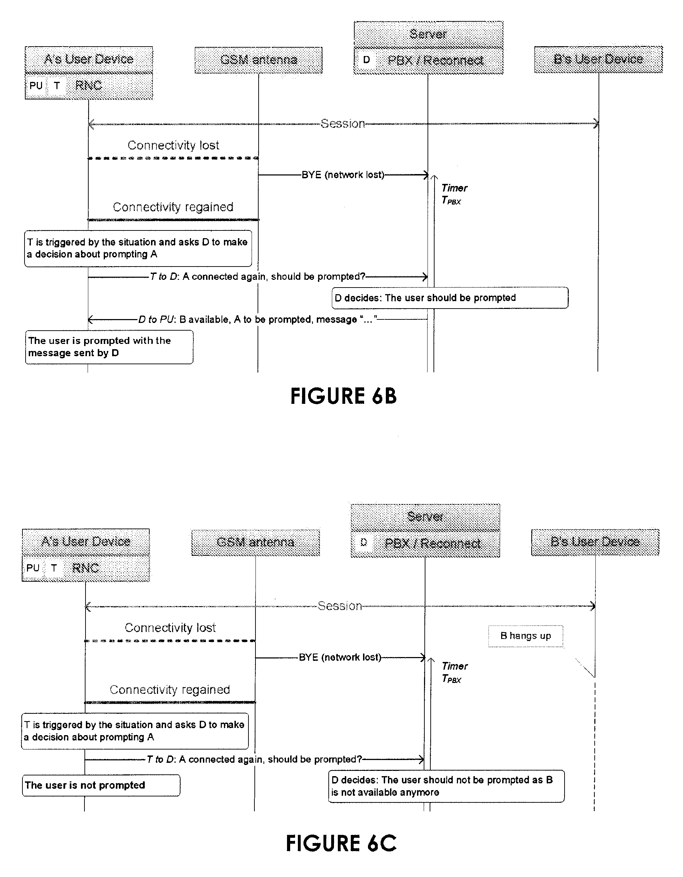

FIGs. 6B-C show different exemplary call flowcharts corresponding to the third exemplary architecture of FIG. 6A and;

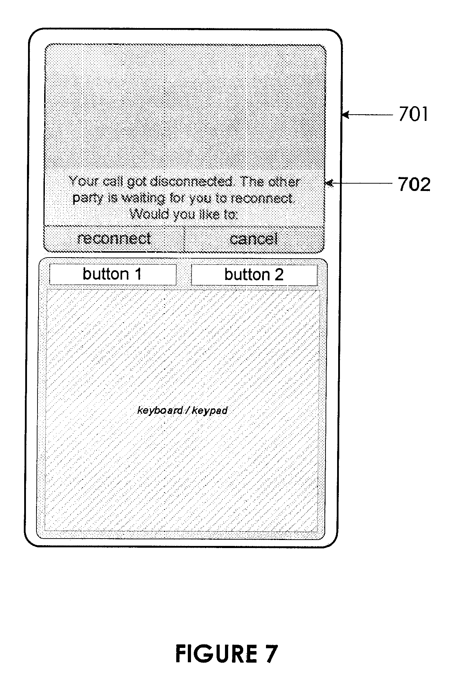

FIG. 7 is an exemplary embodiment of the prompting of the first user A.

### DETAILED DESCRIPTION OF THE PRESENT SYSTEM AND METHOD:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, base stations, or other entities in a telecommunication network are not represented as their implementation is beyond the scope of the present invention.

Unless specified otherwise, the exemplary embodiment will be described hereafter in its application to a PBX (Private Branch exchange) network. This illustration is in no way a limitation of the scope of the present method and system as other telecommunication networks (3G network, GSM network, ... ) may implement such a method.

Furthermore, what will be referred to as a "call" in this description may be a standard voice call or any other session established between a first party referred to as user A and a second party referred to as user B, more precisely between their respective telecommunication devices, for instance a video call between user A and user B. The call will be illustrated here after as a call between two parties A and B. The present teaching may be readily transposed to a call between 3 or more parties with at least one party experiencing a call disconnection.

The term reconnection may refer to distinct situation, i.e. a call or communication reconnection, or a network reconnection. The network reconnection will refer to the network recovery experienced by user A once the cause(s) of the call disconnection ha(ve) been removed. The call reconnection refers to the reconnect feature described in the present document, i.e. the possibility offered to the first party A to resume the call with user B.

In addition, it should be expressly understood that the drawings are included for illustrative purposes and do not represent the scope of the present system.

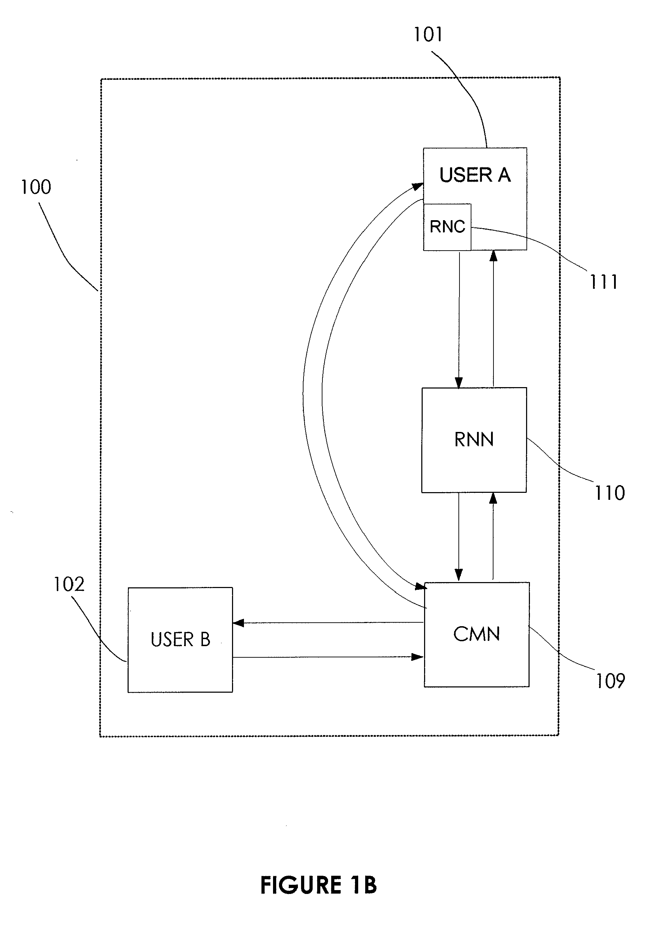

FIG. 1 B shows an exemplary embodiment of the present system. A PBX 100 comprises a first telecommunication device 101 (attached to a first user
A) and a second telecommunication device 102 (attached to a second user
B) communicating with each other. One may note that the second user B may be outside network 100, but will be illustrated here after as in this network as well.

A Private Branch exchange (PBX) is a private telephone network that serves a particular business or office, as opposed to one that a common carrier or telephone company operates for many businesses or for the general public. A PBX is generally enabled through a PBX server and includes an access to a public switched telephone network (PSTN) for access outside the private telephone network (not shown here). The functions of the PBX include the handling of connections between end (or telecommunication) devices such as telephones, and various feature-based services such as voicemail, call forwarding and conferencing, remote call forwarding among others. These features may be activated through service-specific buttons on end devices such as telecommunication devices or through browsing a menu of features available on said end devices or by dialing a service number (non-exhaustive).

The PBX network 100 is provided with a call management node (CMN) 109 that is aware of all signaling messages sent or received by the PBX in connection to a communication session between user A and user B. These signaling messages may either transit through CMN 109 ("direct awareness") or notification of such messages may be sent to CMN 109 ("indirect awareness"). CMN 109, like CMN of FIG. 1A, allows the implementation of the call reconnect feature (implemented for instance through a software), i.e.:
- retaining any BYE message sent to the second user B after disconnection of the first user A, so as to keep the call active for user B,
- reconnecting the first user A with the second user B provided the reconnection is possible.

Furthermore a service node (not shown in FIG. 1 B) may also provided for rendering one or more services to any user of the PBX network, services such as voicemail, media rendering or else. User B may be connected to this service node for the provision of one or more services when waiting for user A to reconnect.

When both users A and B are in a communication (or call) with each others, different entities of the PBX network (not shown here) are involved to ensure the communication link between said users. A communication between these two users generally involves a two level exchange mechanism:
- a signaling level corresponding to the signaling messages exchanges through the network entities between the two users, the signaling level being used for instance to establish a communication between the users,
- a media level for handling data, voice, ... which are involved in the communication.

A communication path (also called link, branch or leg) is formed within the network through different network entities to ensure the connection between these two users. Once the communication is normally terminated, a BYE message is sent by either telecommunication device that terminated the call (if not both), and this message is passed on through the different entities (of the communication path) to terminate the exchange.

In the existing solutions, user B may be maintained in the call using CMN 109 (like in the existing solution illustrated in FIG. 1A). This may be achieve through what is called an anchor point, which maintains the user B communication leg active. CMN 109 may act as this anchor point. Another possible anchor point could be the MSC (Mobile Switching Center) in a mobile network.

When user B is maintained in the call, he could nonetheless terminate the call, not willing for instance to wait for user A hypothetical call reconnection. A BYE message will then be generated from his side of the communication path. When user B is not maintained in the call, a BYE message will be sent to user B through the different entities of the communication path.

As a result, user A may request a reconnection of the call without knowing that it will fail due to user B's disconnection as a BYE message has already been exchanged with said user B (either from or to).

Thanks to the present method, when determining that the first device 101 is able to reconnect the call, the reconnection is carried out if a disconnection message, such as for instance the BYE message, has not been exchanged with the second device 102.

To that effect, a Reconnect Notification Node 110 (or RNN) is provided. RNN 1110 may be operatively connected to CMN 109, e.g. either in a different physical location then CMN 109, or they may be parts of the same standalone node, ensuring part of if not all the implementation of the present method, as well as the call reconnect feature. Thanks to its link with CMN 109, RNN 110 may be aware of (i.e. monitor) any BYE messages exchanged with the second device 102, thus facilitating a successful reconnection between the two users A and B when former is able to resume the call. RNN 110 may be seen as a node ensuring the feature of verifying user B's status (or availability) through the monitoring of the BYE messages that may be exchanged with the second telecommunication device 102.

In the illustration of FIG. 1B, the first user A is connected to user B through RNN 110 and CMN 109 (straight lines). In an alternative embodiment of the present system, user A may be connected to user B through CMN 109, the RNN 110 being operatively linked to CMN 109.

In an additional embodiment of the present method, a reconnection prompt may be provided to the first user 101 after regaining connectivity. A Reconnect Notification Client 111 (or RNC) may thus be hosted by the first device 101. The RNC may be a software allowing the notification to the user A of the first telecommunication device 101 of a possible reconnection to user B.

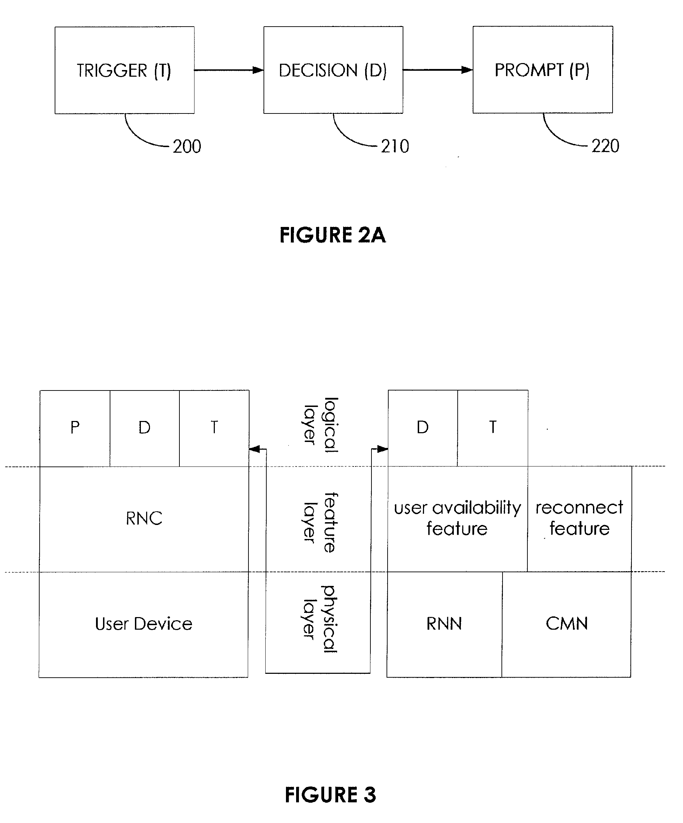

FIG. 2A illustrates an exemplary logical architecture for implementing the present method. Three logical entities may be defined to ensure a successful call reconnect feature:
- a trigger (T) entity 200;
- a decision (D) entity 210; and,
- a prompt (P) entity 220.

One may note that illustrating the three entities 200 to 220 as separate parts is in no way limiting as these three parts could be hosted by the same node or server, for instance RNN 110, by the same telecommunication device 101, or being operatively linked to each other. In other embodiments of the present system, some of the entities may be hosted by the first telecommunication device as illustrated later on. The three part presentation helps to illustrate the different tasks performed in the present method.

The Trigger entity 200 is the logical element which decides when to trigger the reconnection decision process. The trigger is basically activated by the first user A being connected again to the network after he lost his connectivity during a call. This can be defined by the three facts or conditions:
- user A previously lost his network connectivity,
- user A was in a call (session) when that happened, and;
- user A regained (network) connectivity.

The trigger entity 200, when activated after the three conditions listed above are met, will request the next entity, Decision entity 210, to take the decision whether to prompt the user A or not for establishing a call reconnection. The trigger entity 210 may be aware for instance of user A reconnection to the network 100 through messages exchanged for instance with the node in charge of the registration of all network 100 users. This may be for instance the HLR (Home location register) in a GSM (Global System for Mobile communications) network or the MSC.

The decision entity 210 is the entity which decides, based on a number of criteria, if the right conditions are met to reconnect user A with user B. When decision entity 210 is contacted by the trigger entity 200, it may be informed as a result that user A previously lost his connectivity during a call and now is connected again.

One or more messages may be exchanged between the trigger entity 200 and the decision entity 210. At least one "decision to make" message should be sent by the trigger entity to activate the decision entity. This message may contain for instance:
o User A identity
o User B identity
o Disconnection duration, if known

A "decision to make" feedback message may be sent by the decision entity 210 in response to the trigger entity 200:
o Status (e.g. OK, user B not available now, not OK ...)
o Reason (user unknown, service not authorized...)

In order to take the decision for reconnection of the call, this entity 210 may take one or more of the following decision factors into account such as:
- user B's availability, i.e. if user B's side of the call (also referred to here after as leg of the call) is still active. As seen before, the disconnection of user B may result from user B hanging up or the BYE message from user A's own disconnection being forwarded through the user B's call leg. This criterion corresponds to an exemplary embodiment of the present method as illustrated in FIGs. 2B-C and described here after,
- time factors, e.g. a timer has not ended since user A disconnection, or a duration between the disconnection of user A and the current time has not exceeded a given threshold. Indeed it may be interesting to limit the time frame within which the call reconnect feature is prompted to the user A,
- network status, resources or configuration, e.g. when no line is available at the network level to maintain the call leg of user B active or when CMN 109 is overloaded with multiple ongoing reconnections,
- user subscription or group of users subscription, in order to favor certain users with premium subscription agreements.

These decision factors or criteria may be configurable either by directly acting upon the decision entity 210 or through a database of decision criteria the entity 210 has access to. It may also be possible to add/remove and/or enable/disable these decision criteria. For instance the decision entity may rely upon no criterion, i.e. decide to either:
- prompt user A for reconnection as soon as the trigger entity 200 informs entity 210 that the first device 101 is able to reconnect the call, or
- request for the reconnection feature from CMN 109 without prompting user A.

When a reconnect feature is not available, i.e. the BYE message from user A is not intercepted, it may be of interest to simply prompt the first user A to try to call the second user B, or proceed with the reconnection without prompt. In this case, the only parameter could be for example the duration of the disconnection.

When the one or more decision criteria/factors are met for reconnecting user A, the decision entity 210 may contact a prompt entity 220 for further prompting said user A with a reconnection prompt.

The Pop-Up or Prompt entity 220 is the entity which prompts the first user A to let him know that the reconnect feature is available as he has regained connectivity. The prompt entity 220 is in charge of prompting the user whether he wishes to resume the call with user B. This prompt entity is implemented in the RNC 111 hosted by the first telecommunication device 101.

The decision entity 210 may activate the prompt entity 220 through one or more messages. As with the exchange of messages between the trigger and decision entities, the main information here goes from the decision to the prompt entity, as user A may be prompted if is worth trying a reconnection. A "prompt user" message may be sent from the decision entity 210 to the prompt entity 220 and may contain none, one or more of following parameters:
o Method to prompt user (message to display, vibrating the phone, screen flashing...)
o Message to display the prompt to the user
o Shortcut to use (e.g. name of the shortcut + what the shortcut will do)
o Time to display shortcut (if the reconnect timer will end after one minute, there is no point displaying anything more than that)
o Time to display message (if the reconnect timer will end after one minute, there is no point displaying anything more than that)

A "prompt user answer" message may be sent back by the decision entity and include:
o Status (OK, not available now, not OK...)
o Reason (service not available, phone busy...)

Various ways to prompt the user may be envisaged in the present method:
- showing the user A a message suggesting a reconnection,
- showing the user a message suggesting a reconnection but only for a limited time,
- having the phone vibrating or making a sound,
- proposing a shortcut so that the user can for example activate the reconnect feature in one click,

FIG. 7 shows an illustration of a prompt interface on the first telecommunication device 701 with a user interface 702. Other prompting techniques are readily available to the man skilled in the art and are beyond the scope of the present method and system.

Any of the prompt parameters the prompt entity 220 may use (how to prompt, for how long...) could be for instance:
- static or dynamic (i.e. always the same until reconfigured or depending on the situation)
- configured or determined by the prompt engine 220 itself (as configured by user for instance) or based on one or more parameters passed on by the decision entity 210.

For example, as seen before with the "prompt user" message, the decision entity 210 may give the prompt entity 220 a display duration or a time at which it should stop prompting the first user, based for instance on the loss of connectivity duration. The prompt entity 220 may also be configured to re-use the device current settings to determine how to prompt the first user: it may make a sound when the telecommunication device is in a normal mode but only vibrate if the device is in a "meeting" mode, or it may simply not prompt the first user if he is already in a call, no matter what parameters are passed on by the decision entity 210.

The different prompt parameters which may be taken into account, whether in the decision or in the prompt entity, may be for instance:
- same type of parameters as in the reconnect feature (e.g. if a timer is used in the feature, a timer may be used as well to decide for how long the user should be prompted)
- user A general profile (e.g. GSM/3G profile in a mobile environment)
- user A feature profile (e.g. the profile may say "do not prompt if ...")
- user B's status.

Once a request for reconnection has been provided/input by user A in answer to the prompt, the reconnection of the call may be carried on either by CMN 109 or other node in the network capable of connecting the user A to the anchor point of user B's call branch.

As the entities described here above are logical entities and may be in different locations, the messages between these entities can be seen as "logical" messages. As such they may be transported over any protocol and any layer and may reuse known protocol messages (e.g. a SIP "Notify" message for the "decision to make"). For example, they could be transported over a network between two elements or just send from one software module to another (e.g. with a procedure call).

One may note that the prompt entity 220 may be seen as optional. Indeed, provided the decision entity 210, based on the decision factors, comes to the decision that the reconnection is possible, it may proceed directly with requesting the reconnect feature from CMN 109, i.e. without prompting the user A. Unless mentioned otherwise, the hereafter illustrations will comprise the reconnection prompt of the first user. This is in no way limiting as the man skilled in the art will adapt easily the present teachings to the scenarios wherein the reconnection feature is requested provided the decision factors are met.

As illustrated here before, the decision on prompting user A may be based on a first series of one or more decision factors listed here before, the verification of the user B's status being one of them. This exemplary embodiment of the present method is illustrated in FIG. 2B described here below, wherein the reconnection of the call is carried on if user B's status is checked as available.

In an alternative embodiment of the present method, the decision entity may be solicited twice. Once the user A has replied to a reconnection prompt with a reconnection request, the decision entity may further check more factors before requesting the reconnect feature. This embodiment is illustrated in FIG. 2C, wherein the decision to prompt is based on a first number of factors, and wherein, on the reconnection prompt has been provided by the first user A, the decision entity further checks if no BYE message has been exchanged with the second device 102 before requesting the reconnect feature.

As some acts of the embodiments of FIG.s. 2B and 2C are common, the same reference number will correspond to the same acts.

As illustrated in FIG. 2B , in a preliminary act 240, a disconnection (a loss of connectivity) during a communication established between the first and second users occurs. As mentioned before, a disconnection message, for instance a BYE message, is sent from the first user leg of the call to the second user's side. When the reconnect feature is available, this BYE message is retained so as to not terminate user's B leg of the call. In a further act 245, once user A has regained connectivity, the trigger entity 200 as explained here before will inform the decision entity 210 (i.e. activate the decision entity) that the trigger for reconnection has been activated, and that a decision for reconnection may be taken.

In a further act 250, the decision entity 210 will decide whether to prompt the first user A for a reconnection to the communication with user B. In the embodiment illustrated in FIG. 2B, the decision may be based on one or more factors, these factors including at least the verification of user B's availability. Indeed in a further act 255, the decision entity 210 will verify if a disconnection message has not been exchanged with the second user B. If so, in a further act 275, the present method will end as user B is no longer available to resume the call.

When no BYE message has been exchanged with user B, the act of reconnecting may be carried on through acts 260 to 270 (provided the other factors for decision, if any, are also met). In act 260, the decision entity will proceed with contacting the prompt entity 220 for providing a reconnection prompt to the first user A for reconnection to the second user B. After receiving a reconnection input, i.e. a reconnection request, from the first user A in response to the prompt (answer Yes to act 265), user A and user B will be reconnected in a further act 270. Were the user A to decline the prompt or not to answer to the prompt in the time given to answer, if any (answer N in act 265), the present method will end in act 275.The alternative embodiment of FIG. 2C defers in that the availability of user B is checked after the reconnection request from user A. In other words, the decision of act 250 to carry on with prompting user A (in act 260) may depend upon factors other then user B's availability. After receiving a reconnection request from the first user A in response to the prompt (answer Yes to act 265), the RNN 110 will verify if a disconnection message has not been exchanged with the second user B (act 266). If so, i.e. a BYE message has been received or sent, the present method will end in act 270. If not, user A and user B will be reconnected in a further act 270.

In the illustration of FIG. 2C, the act of receiving a reconnection input from the first party (Yes to act 265) is carried out prior to the act of reconnecting (act 270).

In an additional embodiment of the present method, checking user B's availability may be carried out both prior and after the reconnection request (in response to the prompt), as user B may chose to disconnect in that period of time. This corresponds to the embodiment illustrated in FIG. 2C, with the decision of act 250 taking also into account the status of user B.

Furthermore, one may note that in both illustrations of FIG. 2B and 2C, the present method may end (act 275) if the decision entity, based on the decision factors opts for ending the reconnection.

If the prompt of the first user A is not activated or available, the act 270 will follow the act 255 when no BYE message has been exchanged with user B as illustrated by the dotted line in FIG. 2B. Similarly, the act 266 will follow the act 250 as illustrated by the dotted line in FIG. 2C.

FIG. 3 is an illustration of exemplary architectures of the present system. Different layers are shown to enclose the device/servers (physical layer), the features implemented thereon (software layer) as well as the logical entities (logical layer) of the present system. These different embodiments will be described in details hereafter. Depending on the embodiments, the decision and trigger entities are implemented in the features hosted by either the telecommunication device or by the RRN 110.

In the hereafter exemplary embodiments, to know whether the decision for reconnection is device or server based, one has to look at the physical element (server or device) in charge of deciding whether it is possible for the first user A to try a reconnection with the second user B.

In the first exemplary embodiment of the present system, illustrated in FIGs. 4, all logical entities, as the entities T, D and P are implemented in the RNC hosted on the user device, a device only implementation is disclosed. The RNN 110 will then provide the status of user B upon queries from the RNC 111 so that the decision entity D may take this parameter into account to request the reconnect feature from the CMN 109.

In both the second and third exemplary embodiments of the present system, as illustrated respectively in FIGs. 5 and FIGs. 6, the decision entity is implemented in the user availability feature hosted by the RNN 110, making these embodiments server based implementations.

An exemplary illustration of the device only implementation is shown in FIGs. 4A to 4C. As can be seen in FIG. 4A, all entities T, D and P are provided in the RNC hosted on the user device. The RNC is thus for instance configured to prompt the user - if certain conditions (the decision criteria) are met - before trying to reconnect the call. This may be e.g. an amount of time passed since the connectivity loss. When the reconnect feature is available with its own timer to maintain the second user in the call, the timer within which user A may be prompted could be equal or very similar to the reconnect feature timer. As the first telecommunication device is aware of any loss or gain of network connectivity (through its SIM card toolkit for instance) and if the first user had an active call when he lost his connectivity, the RNC may start its timer after the call disconnection. Then if the user gains connectivity again before the end of the timer (activation of the trigger entity), the client may prompt the user to let him know that he can try to reconnect the dropped call.

The device only implementation may be useful in a configuration with no reconnect feature available. Then the first user A could just have a timer and be prompted with a sound or vibration that his first device has regained connectivity and that he can call the user B back. In a further embodiment of the present invention, the RNC may be configured to request the user B's status to the RNN 110 through a query. Provided user B is reported as available by the RNN (i.e. the call is active for the user B thanks to the reconnect feature), the RCN will request the reconnection of the call according to the present method.

Exemplary embodiments of the device only implementation are illustrated in FIGs. 4B and 4C through the message flowcharts between the different elements of the present system, namely, the first telecommunication device 101 comprising the RNC, the mobile network 100, the CMN/RNN 109/110 servers (regrouped for simplification purposes) and the second telecommunication device 102.

In these examples, the "reconnect" feature is available in an enterprise network in a PBX (or connected to a PBX but then seen as logically part of the PBX). The reconnect feature is characterized with a timer T_{PBX} which defines the time before which user A has to reconnect since he has lost connectivity (as seen from the PBX point of view).

In this example, so as to avoid that user A is prompted for reconnection for a much longer elapsed time then T_{PBX}, a time factor T_{USER} is also defined for the decision entity, T_{USER} being either equal or similar to T_{PBX}, the entity D deciding to prompt the user A whether the elapsed time since the loss of connectivity is greater then T_{USER}.

Depending on how the loss of connectivity is handled by the PBX, the time on the PBX side may start at a different time then the RNC timer. In the illustration of FIG. 4B, the reconnect feature is available and the BYE message from user A is not forwarded to user B, who remains connected for at least T_{PBX}. The trigger entity is activated before the end of the timer T_{USER}. The RNC then queries the RNN for user B's status. If the user B is reported as still available (i.e. he has not hung up while being maintained on line), the user A may be prompted by the P entity. This corresponds to the exemplary embodiment of FIG. 2B wherein the reconnection is carried out once user B's status is reported as available (no BYE message exchanged with his telecommunication device). In the alternative embodiment of FIG. 2C, wherein the user A is prompted before checking the user B's status (not shown in FIGs. 4B and 4C), the RNC may either query the RNN for this or may simply send a reconnection request to either RNN and/or CMN, the RNN performing the user availability feature directly before the possible reconnection of the call.

FIG. 4C is an illustration of the case wherein the connectivity is not regained before T_{USER} from the call drop. Whether the second user B maintained in the communication or not is irrelevant as the first user A will not be prompted for reconnection.

An exemplary illustration of the server based implementation is shown in FIGs. 5A to 5C. As can be seen in FIG. 5A, the entities T and D are provided with the user availability feature hosted on the RNN 110, while the prompt entity P is provided with the RNC on the telecommunication device 101.

The network/PBX (the entity managing the user A) notices that the user A is connected again, e.g. the mobile network notices that one of his subscribers is connected again to one of his antennas (for instance a GSM or 3G antennasor radio base stations). The trigger entity T can have access to all the required information for triggering the decision entity as indeed it knows if the first user A was in a call when he lost his connectivity and has now regained connectivity (as reported from a base station or an MSC for instance after registration of the user A). An MSC may be provided as the anchor point to maintain user B in the communication through the reconnect feature. One may note user B may be maintained in the call in many different ways. As illustrated in the Applicant's pending EP08305081, a service such as a media service or a voice mail could be provided to this second user B to inform him of the possibility of a reconnection of the first user A.

In the exemplary implementation of a mobile network environment, the RNN may be connected to or part of the MSC for example. Then once user A is connected again, the RNN will be informed by the call anchor point (the MSC in this example, through e.g. a signaling message), which will trigger entity T. As mentioned before the call anchor point is the element maintaining user B's call leg once user A has been disconnected.

As the decision entity is activated by the trigger entity, the decision criteria will be checked, among which e.g. the verification that user B is still connected. As the decision entity is on the network side, enhanced decision criteria may be defined for the decision entity.

Exemplary embodiments of the server implementation are illustrated in FIGs. 5B and 5C through the message flowcharts between the different elements of the present system, namely, the first telecommunication device 101 comprising the RNC (entity P only), the mobile network 100 (through the GSM antenna or base station), the MSC and RNN (as one logical entity comprising the T and D entities) and the second telecommunication device 102. The reconnect feature may for instance be hosted in this exemplary embodiment by the MSC or the RNN.

As in the exemplary embodiment of FIGs. 5, a timer is available for the reconnect feature and is called T_{MSC}. It determines the maximum time the second user B will be kept connected in case the first user A attempts a reconnection. In this example, it is also the maximum allowable time (decision criterion) for the first user A to regain connectivity. Beyond T_{MSC}, the decision entity D will not prompt the first user A for reconnection. As can be seen from FIGs. 5B and 5C, the RNN will verify with the MSC if user B is available as MSC is presently the anchor point for the second user B. If this second user B is still connected (FIG. 5B), the first user A will be prompted. To that effect, the RNN may provide the first telecommunication device 101 with a reconnection prompt, the first telecommunication device 101 being arranged to present the reconnection prompt to the first user A. If user B is not available (FIG. 5C), the decision entity will not prompt the first user and the reconnect feature will not be activated. The exemplary embodiments of FIGs. 5B and 5C correspond to the exemplary embodiment of the present method in FIG. 2B as the status of user B is checked before triggering (or not) the reconnect feature.

Another exemplary illustration of a server based implementation is shown in FIGs. 6A to 6C. As can be seen in FIG. 6A, the entities T and P are provided with the RNC 111 hosted by the telecommunication device 101 while the decision entity D is provided with the user availability feature hosted on the RNN 110.

In this implementation, the network, here the RNN, can decide if it is necessary for A to try a reconnection, but it will make this decision based on the user A's request, as the prompt entity is hosted on the first telecommunication device.

This implementation may be used when the RNN does not know when or if user A has a network connection again. As a consequence, the triggering entity does not know when the decision entity should be activated. This situation happens for example in a PBX environment wherein the PBX cannot know if A is connected to the mobile network or not. In this situation, the trigger entity in the RNC (hosted on the first telecommunication device) sends a request through the network to the RNN for activating the decision entity. The decision entity may access all other necessary information for the network side (including user B's status) to verify the decision criteria.

Exemplary embodiments of this server implementation are illustrated in FIGs. 6B and 6C through the message flowcharts between the different elements of the present system, namely, the first telecommunication device 101 comprising the RNC (entities T and P), the mobile network 100 (through the GSM antenna), the PBX hosting the RNN (comprising the D entity) and the CMN (in charge of the reconnect feature) and the second telecommunication device 102. The PBX, CMN and RNN are illustrated as one single logical node but may be physically collocated or distant from one another.

Here the entity T will be activated if the first user A lost his connectivity during a session and then is connected again, as described before. Then entity T will send a message to the RNN so that the entity D decides upon prompting the first user A. Entity D will rely upon decision criteria, including whether the second user B is still connected (for instance by retrieving the information from CMN. As can be seen from FIGs 6B and 6C, requests are exchanged between the telecommunication device and the RNN (entities T to D) and from the RNN to the telecommunication device (D to P).

FIG. 6B illustrates an exemplary embodiment wherein the user B is still available and a reconnection prompt (through e.g. a signaling message) is sent from the RNN to the first telecommunication device to prompt the user A for reconnection. In the exemplary embodiment of FIG. 6C, as the second user B is no longer available, the RNN does not reply to the request from the first telecommunication device, and the first user A is not prompted.

Thanks to the present method and system, it becomes possible to only prompt the user A for reconnection if the user B is still connected. When the prompt is not available, the first user A will nonetheless be reconnected if the second user B is still connected. Thus, the reconnect feature can be optimized by only linking the reconnection when there is a higher chance to effectively re-establish the call with B.

One may note that when a service such as media service or voicemail is provided to the second user B while waiting for A to reconnect, the service will be stopped and both users reconnected after the reconnection is activated.

In the description here above, reference was made to different types of networks and servers (RNN, CMN, MSC, ...). The man skilled in the art may extend the present teachings to any type of networks wherein a reconnection feature may be implemented. Furthermore, the agent RNC may be provided with the telecommunication device, or downloaded from the network through subscribing to the call reconnect feature.

Finally, the above-discussion is intended to be merely illustrative of the present system and should not be construed as limiting the appended claims to any particular embodiment or group of embodiments. Thus, while the present system has been described with reference to exemplary embodiments, it should also be appreciated that numerous modifications and alternative embodiments may be devised by those having ordinary skill in the art without departing from the broader and intended spirit and scope of the present system as set forth in the claims that follow.

The focus has been on a private network. The present teachings may be used in a telecommunication network wherein a plurality of (IP-)PBX switches and a set of PBX features are available to terminals of said telecommunication network.

The section headings included herein are intended to facilitate a review but are not intended to limit the scope of the present system. Accordingly, the specifications and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analogue and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. In a telecommunication network, a method for reconnecting a first party in a call with a second party after said first party experienced a call disconnection with said second party, said method comprising the act of reconnecting the first party with the second party when determining that said first party is able to reconnect the call, wherein the act of reconnecting is carried out if no disconnection message has been exchanged with the second party.

2. The method according to the previous claim, wherein the act of reconnecting further comprises an initial act of providing a reconnection prompt to the first party for reconnecting to the second party, said act of reconnecting being carried on after receiving a reconnection request from the first party in response to the prompt.

3. The method according to claim 1, further comprising an act of receiving a reconnection request from the first party prior to the act of reconnecting.

4. A telecommunication device for reconnecting a first party of said telecommunication device in a call with a second telecommunication device of a second party after said first party experienced a call disconnection with said second telecommunication device, said telecommunication device being arranged to reconnect with the second telecommunication device if no disconnection message has been exchanged with said second telecommunication device.

5. The device according to the previous claim, said device being further arranged, if no disconnection message has been exchanged with the second telecommunication device, to:
- provide a reconnection prompt to the first party for reconnecting to the second party,
- carry on with the reconnection with the second telecommunication device after receiving a reconnection request from the first party in response to the prompt.

6. The device according to claim 4, said device being further arranged to wait for a reconnection request from the first party before reconnecting with the second telecommunication device.

7. A reconnection request server for reconnecting a first party in a call with a second party after said first party experienced a call disconnection with said second party, said server being arranged to monitor signaling messages of any call disconnection of either parties, said server being further arranged to reconnect the first party with the second party when determining that said first party is able to reconnect to the call, wherein said server is arranged to reconnect the first party with the second party when determining that no disconnection signaling message has been exchanged with the second party.

8. The server according to the previous claim, said server being further arranged to, if no disconnection signaling message has been exchanged with the second party:
- provide a reconnection prompt to the first party for reconnecting to the second party,
- reconnect the first party with the second party after receiving a reconnection request from the first party in response to the prompt.

9. The server according to claim 7, said server being further arranged to wait for a reconnection request from the first party prior to reconnecting the first party with the second party.

10. A telecommunication system for reconnecting a first telecommunication device of a first party in a call with a second telecommunication device of a second party after said first party experienced a call disconnection with said second party, said system comprising a reconnection request server for reconnecting said first party to said second party, said server being arranged to:
- monitor signaling messages of any call disconnection of either telecommunication devices,
- reconnect the first party with the second party when determining that the first telecommunication device is able to reconnect to the call,
wherein said server is further arranged to reconnect the first party with the second party when determining that no disconnection signaling message has been exchanged with the second telecommunication device.

11. The system according to the previous claim, said server being further arranged to, if no disconnection signaling message has not been exchanged with the second telecommunication device:
- provide a reconnection prompt to the first telecommunication device of the first party for reconnecting to the second party,
- reconnect the first party with the second party after receiving a reconnection request from the first telecommunication device in response to the prompt, the first telecommunication device being arranged to:
- present the reconnection prompt to the first party,
- provide a reconnection request from the first party to the reconnection request server in response to the prompt.

12. The system according to claim 10, said server being further arranged to:
- provide a reconnection prompt to the first party for reconnecting to the second party,
- wait for a reconnection request from the first party prior to reconnecting said first party with the second party, the first telecommunication device being arranged to:
- present the reconnection prompt to the first party,
- provide a reconnection request from the first party to the server in response to the reconnection prompt.

13. A telecommunication system for reconnecting a first telecommunication device of a first party in a call with a second telecommunication device of a second party after said first party experienced a call disconnection with said second party, said system comprising:
- a reconnection request server for:
- monitoring signaling messages of any call disconnection of either telecommunication devices,
- informing the first telecommunication device of any disconnection signaling message exchanged with the second telecommunication device,
the first telecommunication device being arranged to:
- query the reconnection request server for any disconnection signaling message exchanged with the second telecommunication device,
- reconnect with the second telecommunication device after verifying with the reconnection request server that no disconnection signaling message has been exchanged with said second telecommunication device.

14. A computer readable carrier including computer program instructions that cause a computer to implement a method for reconnecting a first party in a call with a second party after said first party experienced a call disconnection according to claims 1 to 3.
